# EUROPÄISCHE PATENTSCHRIFT

(11) **EP 2 739 469 B1**
(45) Veröffentlichungstag und Bekanntmachung des Hinweises auf die Patenterteilung: **08.09.2021**
(21) Anmeldenummer: 12743882.8
(22) Anmeldetag: 27.06.2012
(51) Int. Cl.: B32B 5/22, B32B 5/30, B32B 9/02, B32B 9/04, B60R 13/02, B29C 65/02, B32B 5/26

(54) **INNENAUSSTATTUNGSTEIL AUFWEISEND PFLANZLICHE NATURSTOFFE**
INTERIOR FITTING PART HAVING PLANT-BASED NATURAL PRODUCTS
ÉLÉMENT D'ÉQUIPEMENT INTÉRIEUR COMPORTANT DES SUBSTANCES VÉGÉTALES NATURELLES

(30) Priorität: 05.08.2011 DE 102011109555; 11.08.2011 DE 102011109979
(43) Veröffentlichungstag der Anmeldung: 11.06.2014
(73) Patentinhaber: Johnson Controls Interiors GmbH & Co. KG, 47929 Grefrath (DE)
(72) Erfinder: PARUCHURI, Sreenivas, 40221 Düsseldorf (DE); KALUS, Holger, 47228 Duisburg (DE)
(74) Vertreter: Trinks, Ole
(86) Internationale Anmeldenummer: PCT/EP2012/002703
(87) Internationale Veröffentlichungsnummer: WO 2013/020617

(56) Entgegenhaltungen:
- WO-A1-98/06600
- WO-A1-98/06600
- WO-A1-2010/080967
- CN-A- 1 605 462
- DE-A1- 10 244 709
- DE-A1- 19 706 839
- DE-A1- 19 706 839
- DE-U1-202006 002 835

## Beschreibung

Die Erfindung betrifft ein Ausstattungsteil für den Innenraum eines Kraftfahrzeugs sowie ein Verfahren zur Herstellung eines Ausstattungsteils.

Aus der internationalen Patentanmeldung WO 2010/080967 A1 ist ein Ausstattungsteil mit einem Träger aus Naturfasern und einer transparenten Deckfolie bekannt, die ohne Verwendung zusätzlicher Schmelzkleber auf der Oberfläche des Trägers angebracht wird.

Die Druckschrift DE 102 44 709 A1 betrifft ein Ausstattungsteil, insbesondere ein Verkleidungsteil für den Innenraum eines Kraftfahrzeugs, mit einem Träger und mindestens einer mit diesem verbundenen Dekorschicht aus Naturwerkstoff, sowie ein Verfahren zur Herstellung derartiger Ausstattungsteile.

Die Druckschrift DE 20 2006 002 835 U1 betrifft ein Fahrzeuginnenraumdekorteil, umfassend: einen Grundkörper aus spritzgegossenem Kunststoffmaterial, eine am Grundkörper angebrachte Dekorlage, die in einem eine Sichtfläche des Dekorteils bildenden Bereich angeordnet ist, wobei die Dekorlage beim Spritzgießen des Grundkörpermaterials mit dem Grundkörper verbindbar ist, und eine einen transparenten Nasslack enthaltende Nasslackschicht, die an der Sichtfläche auf die Dekorlage aufgetragen ist.

Der Erfindung liegt die Aufgabe zugrunde, ein Ausstattungsteil mit einer ansprechenden Optik sowie guten Eigenschaften hinsichtlich Kratzfestigkeit, UV-Stabilität und Kosten anzubieten. Ferner soll ein Verfahren zur rationellen Herstellung preiswerter und optisch ansprechender Ausstattungsteile bereitgestellt werden.

Im Hinblick auf das Ausstattungsteil wird die der Erfindung zu Grunde liegende Aufgabe durch den Gegenstand des unabhängigen Patentanspruchs 1 gelöst, wobei vorteilhafte Weiterbildungen des erfindungsgemäßen Ausstattungsteils in den abhängigen Patentansprüchen 2 bis 7 angegeben werden.

Im Hinblick auf das Herstellungsverfahren wird die der Erfindung zu Grunde liegende Aufgabe durch den Gegenstand des nebengeordneten Patentanspruchs gelöst, wobei vorteilhafte Weiterbildungen des Herstellungsverfahrens in den abhängigen Ansprüchen 9 bis 12 angegeben sind.

Demgemäß betrifft die Erfindung ein Ausstattungsteil, das einen Träger aufweist, der aus einem mindestens einen Naturstoff enthaltenen Werkstoff gefertigt ist, wobei der Träger zumindest anteilig auf seiner Sichtseite mit einer Dekorlage aus einem natürliche, vorzugsweise pflanzliche, Fasern enthaltenen Werkstoff überdeckt ist. Erfindungsgemäß ist insbesondere vorgesehen, dass der Träger und/oder die Dekorlage zumindest anteilig mit einer transparenten oder transluzenten Decklage versehen ist, dass die Decklage eine Folie ist, dass eine Lackschicht auf die transparente oder transluzente Decklage aufgetragen ist oder die Decklage eingefärbt ist, dass die Fasern des Werkstoffs der Dekorlage als Fließ, Filz, Gewebe oder als Gestrick vorliegen, und dass der Träger oder die Dekorlage in ihrem Material ein Bindemittel aufweisen, welches aus einem thermoplastischen Kunststoff besteht.

Der Träger weist als Naturstoff vorzugsweise Holzfasern- oder -partikel auf, die über ein Bindemittel miteinander verbunden sind. Dem Werkstoff des Trägers können zur Steigerung der Festigkeit ferner synthetische Fasern, insbesondere aus Polyester, beigemengt werden. Der Anteil an Naturstoff beträgt vorzugsweise 50 bis 85 Gew.-%, insbesondere etwa 70 Gew.-%. Der Anteil an Bindemittel beträgt vorzugsweise unter 50 Gew.-%, insbesondere etwa 15 Gew.-%. Der Anteil an synthetischen Fasern beträgt bei einer bevorzugten Ausführungsform 10 bis 20 Gew.-%, insbesondere etwa 15 Gew.-%.

Der Werkstoff des Trägers, insbesondere der Naturstoff, wird der weiteren Verarbeitung vorzugsweise als verpressbare und/oder genadelte Matte zugeführt.

Gemäß einer weiteren bevorzugten Ausführungsform weist der Träger einen Naturstoff, insbesondere Flachs, Hanf und/oder Kenaf auf, wobei Kenaf besonders bevorzugt ist und als Bindemittel einen thermoplastischen Kunststoff, insbesondere Polypropylen auf. Das thermoplastische Bindemittel wird vorzugsweise ebenfalls als Fasermaterial zur Verfügung gestellt Vorzugsweise besteht der Träger aus 40 - 60 Gew.-% Naturfaser und 60 - 40 Gew.-% thermoplastischem Bindemittel. Alternativ oder zusätzlich kommen aber beispielsweise auch Kokosfasern und/oder tierische Borsten für die Trägerschicht in Betracht. Die Fasern liegen mit Vorteil als Wirrfasern vor, beispielsweise als Vlies.

Dem Werkstoff des Trägers, insbesondere dem Naturstoff, wird ferner mit Vorteil mindestens ein Additiv beigefügt, welches die thermische Stabilität des Naturstoffs während der Verarbeitung erhöht und/oder die Farbbeständigkeit und/oder die Lebensdauer bei Heißlichtbelichtung gewährleistet. Der Träger bestimmt im Wesentlichen die mechanischen Eigenschaften des Ausstattungsteils. Die natürlichen Fasern, das Bindemittel und/oder die Synthesefasern des Trägers können aber auch mit Vorteil gleich oder verschieden eingefärbt werden, vorzugsweise vor ihrer Verbindung.

Der aufgrund seiner Werkstoffzusammensetzung zwar preiswerte, aber unter Umständen optisch weniger ansprechende Träger wird zumindest teilweise mit der Dekorlage überdeckt. Demnach ist die Sichtseite des Trägers mit einer Dekorlage überdeckt, wobei diese Dekorlage die Sichtseite des Trägers teilweise oder vollständig überdecken kann. Der Werkstoff der Dekorlage enthält mit Vorteil Bastfasern, beispielsweise Flachs Hanf, Kenaf oder dergleichen. Alternativ oder zusätzlich kommen aber beispielsweise auch Kokosfasern und/oder tierische Borsten in Betracht. Der Durchmesser der Fasern beträgt vorzugsweise 5 bis 40 µm. Die Länge der Fasern beträgt vorzugsweise 1000 bis 6000 µm. Die Fasern liegen als Vlies, Filz, Gewebe oder Gestricke vor. Der Werkstoff der Dekorlage enthält ferner ein Bindemittel, vorzugsweise ein duroplastisch aushärtendes Acrylharz. Der Faseranteil in der Dekorlage beträgt vorzugsweise 70 bis 90 Gew.-%, insbesondere zwischen 80 und 85 Gew.-%. Der Anteil an Bindemittel beträgt vorzugsweise unter 30 Gew.-%, insbesondere unter 20 Gew.-%. Gegebenenfalls können zur Beeinflussung der mechanischen Eigenschaften in einem Anteil von vorzugsweise weniger als 10 Gew.-% synthetische Fasern, insbesondere aus Polyester, beigefügt werden. Dem Werkstoff der Dekorlage ist ferner mit Vorteil mindestens ein Additiv beigefügt, welches die thermische Stabilität der natürlichen Fasern während der Verarbeitung sowie die Beständigkeit gegen UV-Strahlung erhöht. Geeignete Additive sind beispielsweise Photostabilisatoren wie 4-Hydroxy-2,2,6,6-tetramethylpiperidinoxyl oder UV-Absorber wie sulfoniertes Benzotriezol, die jeweils einzeln oder in Kombination eingesetzt werden können. Die Dekorlage kann im Wesentlichen die optischen Eigenschaften des Ausstattungsteils bestimmen. Die natürlichen Fasern, das Bindemittel und/oder die Synthesefasern der Dekorlage werden daher mit Vorteil gleich oder verschieden eingefärbt, vorzugsweise vor ihrer Verbindung.

Das Bindemittel des Trägers oder der Dekorlage besteht aus einem thermoplastischen Kunststoff, beispielsweise aus Polypropylen (PP), Acryl-Butadien-Styrol (ABS), Polycarbonat (PC) und/oder einem PC/ABS-Blend.

Als Naturfasern, natürliche Fasern oder Naturstoff kommen beispielsweise Holz, Kenaf, Hanf, Flachs, Abacä, Sisal oder ähnliche Pflanzen mit einem Baststengel in Betracht. Bezüglich dieser Fasern bzw. Naturstoffe wird im Übrigen auf die Veröffentlichung "Industrial Applications of Natural Fibres" im Wiley-Verlag, Seiten 25 und 26 verwiesen.

Die Naturfasern oder natürlichen Fasern bzw. der Naturstoff können beispielsweise als Einzelfasern oder in Form von Matten oder Vliesen verarbeitet werden. Die Fasern, beispielsweise die Matten oder Vliese, können, beispielsweise mit Wasserstrahl, verfestigt, thermisch gebunden und/oder Nadelvliese/Nadelfilze sein. Die Faserschicht wird nach einer bevorzugten Ausbildung mit einem transparenten Trägermedium beschichtet. Die Faserschicht, beispielsweise Matte und/oder Vlies, wird vorzugsweise später, besonders bevorzugt durch Pressen, umgeformt. Weiterhin ist bevorzugt, dass die Fasern in Granulate eingebettet sind, die durch Spritzgießen zu einem Ausstattungsteil verarbeitet werden.

Die Decklage besteht mit Vorteil aus einer zumindest teilweise transparenten oder zumindest teilweise transluzenten Kunststofffolie. Die Kunststofffolie kann mit Vorteil aus einem thermoplastischen Polyurethan (TPU), aus Polypropylen (PP) mit einer sichtseitigen Polyurethanbeschichtung, aus Polyamid (PA) oder aus Polycarbonat (PC) bestehen. Eine geeignete Folie kann beispielsweise eine Dicke von 20 µm bis 500 µm aufweisen. Geeignete Folienwerkstoffe sind PP, Polymethylmetacrylat (PMMA), ABS, PC oder PC/ABS. Gemäß der Erfindung wird eine Lackschicht auf die als Folie ausgeführte Decklage aufgetragen, die mit Vorteil aus einem vernetzbaren Polyurethan besteht und vorzugsweise eine Dicke von 5 µm bis 50 µm aufweist. Dem Werkstoff der Decklage sind ferner Additive beigefügt, welche die Beständigkeit gegen UV-Strahlung erhöhen. Die Decklage wird nach einer besonderen Ausbildung der Erfindung eingefärbt, wobei die Farbe der Einfärbung der Dekorlage entsprechen oder von ihr abweichen kann.

Eine Komponente des Ausstattungsteils, beispielsweise die Naturfasern, das Vlies, das Bindemittel und/oder die Decklage, beispielsweise die Folie, ist vorzugsweise für sich oder in Kombination UV-geschützt ausgestattet.

Das Umformen zu einem dreidimensionalen Ausstattungsteil erfolgt nach einer ersten bevorzugten Ausbildung erst nach dem Aufbringen des Oberflächenschutzes auf die mit Matte und/oder Vlies und/oder sonstigen Naturfasern versehene Lage, insbesondere Dekorlage. Nach einer weiteren bevorzugten Ausbildung wird der Oberflächenschutz erst nach dem Umformen der mit Matte und/oder Vlies und/oder sonstigen Naturfasern versehenen Dekorlage vorgenommen. Eine Narbung der Oberfläche kann durch Aufbringen eines genarbten Oberflächenschutzes, beispielsweise einer genarbten Decklage, insbesondere einer genarbten Decklagenfolie oder durch Narbung im Werkzeug erfolgen. Diese Narbung im Werkzeug wird in die Decklage und/oder in die Dekorlage geprägt.

Weiterhin ist mit Vorteil vorgesehen, dass das Ausstattungsteil im Sichtbereich unterhalb des Oberflächenschutzes, beispielsweise unterhalb der Decklage, insbesondere in der Dekorlage, weitere, vorzugsweise gefärbte, Naturstoffanteile, beispielsweise Blätter, Gräser, Horn, Kork oder dergleichen, aufweist.

Die Dicke des Trägers beträgt mit Vorteil 1,5 bis 3,0 mm, insbesondere rund 2,0 mm, wobei der Träger bevorzugt ein Flächengewicht zwischen 1.000 und 1.600 g/m², insbesondere rund 1.400 g/m², aufweist.

Die Dicke der Dekorlage beträgt mit Vorteil 0,1 bis 1,0 mm, insbesondere rund 0,2 bis 0,3 mm, wobei die Dekorlage bevorzugt ein Flächengewicht zwischen 200 und 500 g/m², insbesondere zwischen 300 und 400 g/m², aufweist.

Die Dicke der Decklage beträgt mit Vorteil 0,03 bis 0,50 mm, insbesondere zwischen 0,05 und 0,20 mm.

Bei der Herstellung des Ausstattungsteils werden ein mattenförmiges Halbzeug für den Träger, ein mattenförmiges Halbzeug für die Dekorlage sowie die Decklage aufeinander gelegt und zu einem zwei- oder dreidimensionalen Bauteil unter Wärmezufuhr, jedoch vorzugsweise ohne Verwendung zusätzlicher Klebstoffe, verpresst.

Alternativ, insbesondere bei sehr stark dreidimensional geformten Ausstattungsteilen, kann vorgesehen werden, dass die Dekorlage und die Decklage zunächst miteinander zu einem mehrlagigen Flächengebilde und anschließend mit dem Träger verbunden werden. Das Aufbringen auf den Träger kann beispielsweise durch Kaschieren oder Hinterspritzen, insbesondere mit einem duroplastisches Bindemittel enthaltenden Werkstoff, erfolgen. Mit besonderem Vorteil wird der Verbund aus Dekorlage und Decklage vor der Verbindung mit dem Träger vorgeformt, insbesondere durch Tiefziehen.

Weiterhin ist bei der Herstellung des Ausstattungsteils nach einer besonderen Ausbildung vorgesehen, dass die Dekorlage aus verschiedenen, insbesondere unterschiedlich gefärbten Segmenten zusammengesetzt wird. Die Segmente können auf Stoß gesetzt werden, so dass am Ausstattungsteil eine erkennbare Trennlinie zwischen den Segmenten entsteht. Mit besonderem Vorteil werden die Segmente der Dekorlage jedoch überlappend auf den Träger aufgebracht, wobei sich im Übergangsbereich bei unterschiedlicher Färbung der Segmente durch Farbmischung interessante optische Effekte erzielen lassen.

Falls das Ausstattungsteil mehrere Sichtseiten aufweist, ist es grundsätzlich möglich, jede dieser Sichtseiten ganz oder teilweise mit einer Dekorlage und einer Decklage zu überdecken.

Im Folgenden werden die Erfindungen anhand der Figuren erläutert.
Figur 1 zeigt eine Ausführungsform des erfindungsgemäßen Ausstattungsteils.
Figur 2 zeigt eine weitere Ausführungsform des erfindungsgemäßen Ausstattungsteils.
Figuren 3 und 4 zeigen jeweils ein Ausstattungsteil, bei dem eine Dekorlage einen Naturstoff aufweist.

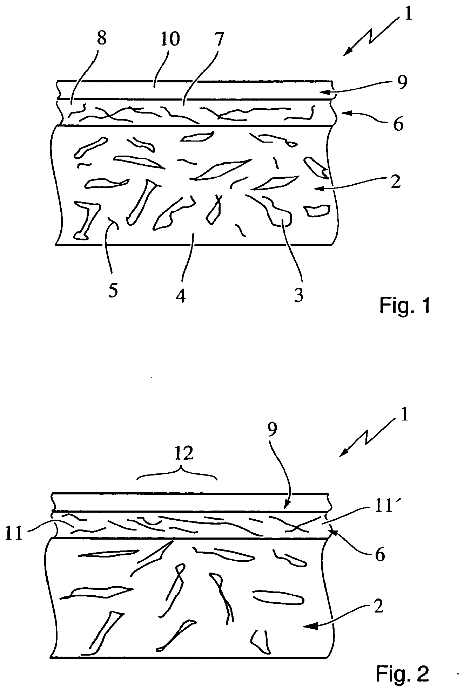

Das in Fig. 1 gezeigte Ausstattungsteil 1 für einen Fahrzeuginnenraum (z. B. Türverkleidung, Armaturentafel, Säulenverkleidung, Dachhimmel, Blende an Fahrzeugsitz) besteht aus einem Träger 2, dessen Werkstoff hier schnitzelartige, relativ grobe Holzpartikel 3 enthält. Die Holzpartikel 3 sind durch ein Bindemittel 4 gebunden. Dem Werkstoff des Trägers 2 sind zur Steigerung der Festigkeit ferner geringe Mengen synthetischer Fasern 5 beigefügt. Auf seiner Sichtseite ist der Träger, hier vollflächig, mit einer Dekorlage 6 überdeckt, die aus vergleichsweise langen natürlichen Fasern 7 in wirrer Anordnung und einem Bindemittel 8 besteht. Die Dekorlage 6 wird vollflächig von einer Decklage 9 in Form einer transparenten Kunststofffolie 10 überdeckt, die das Ausstattungsteil vorzugsweise kratztest und/oder UV-beständig macht. Die Decklage und/oder die Dekorlage können genarbt sein.

Bei der Ausbildung nach Fig. 2 ist die Dekorlage 6 aus zwei einander überlappenden, unterschiedlich gefärbten Segmenten 11, 11' zusammengesetzt, die gemeinsam vollflächig von der Decklage 9 überdeckt werden. Der Überlappungsbereich 12 bildet dabei interessante optische Effekte aus.

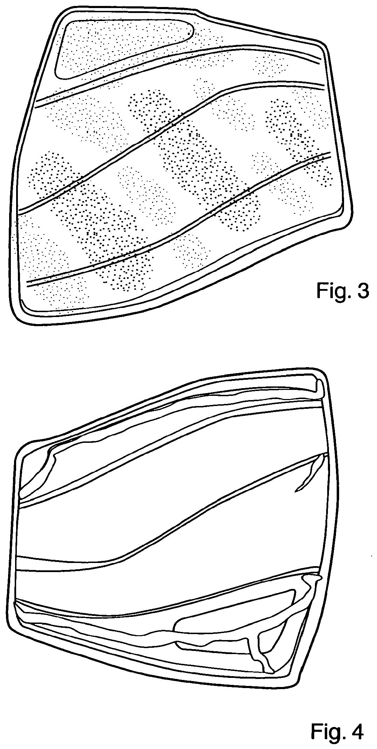

Fig. 3 zeigt das Beispiel einer Dekorlage, die aus einem Kunststoffbindemittel in einer ersten Farbe, eingebundenen Naturfasern in einer zweiten Farbe und eingefügten Hornbestandteilen in einer dritten Farbe besteht. Das Bauteil ist mit einem transparenten Oberflächenschutz, einer Decklage, versehen, der es kratzfester und UV-resistenter macht. Die Dekorlage kann rückseitig eine Trägerschicht aufweisen, die deren Stabilität erhöht. In dem vorliegenden Fall werden die Dekorlage, die Decklage und ggf. die Trägerschicht als dreidimensional geformte Türverkleidung eingesetzt. Die Dekorlage ist durch die transparente Decklage für den Fahrzeuginsassen sichtbar.

Fig. 4 zeigt ein ähnliches Ausstattungsteil, bei welchem anstelle von Horn Kork eingebracht ist. Ansonsten wird auf die Ausführungen zu Fig. 3 verwiesen.

### Bezugszeichen

- 1: Ausstattungsteil
- 2: Träger
- 3: Holzpartikel
- 4: Bindemittel
- 5: synthetische Fasern
- 6: Dekorlage
- 7: natürliche Fasern
- 8: Bindemittel
- 9: Decklage
- 10: Kunststofffolie
- 11, 11': Segment (der Dekorlage)
- 12: Überlappungsbereich

## Patentansprüche

1. Ausstattungsteil (1), das einen Träger (2) aufweist, der aus einem mindestens einen Naturstoff (3) enthaltenden Werkstoff gefertigt ist,
wobei der Träger zumindest anteilig auf seiner Sichtseite mit einer Dekorlage (6) aus einem natürliche, vorzugsweise pflanzliche, Fasern (7) enthaltenden Werkstoff überdeckt ist,
**dadurch gekennzeichnet, dass**
der Träger und/oder die Dekorlage (6) zumindest anteilig mit einer transparenten oder transluzenten Decklage (9) versehen ist;
die Decklage (9) eine Folie ist;
eine Lackschicht auf die transparente oder transluzente Decklage (9) aufgetragen ist oder die Decklage (9) eingefärbt ist;
die Fasern (7) des Werkstoffes der Dekorlage (6) als Vlies, Filz, Gewebe oder als Gestrick vorliegen;
der Träger (2) oder die Dekorlage (6) in ihrem Material ein Bindemittel aufweisen, welches aus einem thermoplastischen Kunststoff besteht.

2. Ausstattungsteil (1) nach Anspruch 1, wobei die Decklage (9) aus einer zumindest teilweise transparenten oder zumindest teilweise transluzenten Kunststofffolie aus einem thermoplastischen Polyurethan (TPU), aus Polypropylen (PP) mit einer sichtseitigen Polyurethanbeschichtung, aus Polyamid (PA) oder aus Polycarbonat (PC) besteht.

3. Ausstattungsteil (1) nach Anspruch 1 oder 2, wobei der Träger (2) Holzpartikel (3) aufweist.

4. Ausstattungsteil (1) nach einem der voranstehenden Ansprüche, wobei die Dekorlage (6) aus einem oder mehreren Segmenten zusammengesetzt ist.

5. Ausstattungsteil (1) nach einem der voranstehenden Ansprüche, wobei eine Lage (6), insbesondere die Dekorlage (6), natürliche Fasern und ein Bindemittel (8) enthält, wobei die Fasern und/oder das Bindemittel (8) gefärbt sind.

6. Ausstattungsteil (1) nach Anspruch 5, wobei die Fasern (7) und das Bindemittel (8) unterschiedlich gefärbt sind.

7. Ausstattungsteil (1) nach einem der voranstehenden Ansprüche, wobei der Träger (2) und/oder die Dekorlage (6) synthetische Fasern (5) aufweisen/aufweist.

8. Verfahren zur Herstellung eines Ausstattungsteils nach einem der voranstehenden Ansprüche, **dadurch gekennzeichnet, dass** die Dekorlage (6) als Halbzeug und die Decklage (9) in ein Werkzeug eingelegt und unter Wärmezufuhr, vorzugsweise dreidimensional, geformt und miteinander verbunden werden.

9. Verfahren nach Anspruch 8, wobei die Decklage (9) anschliessend oder gleichzeitig mit dem Träger (2) verbunden wird.

10. Verfahren nach Anspruch 8 oder 9, wobei der Träger (2), insbesondere durch Kaschieren oder Hinterspritzen, auf der Decklage (9) aufgebracht wird.

11. Verfahren nach einem der Ansprüche 8 bis 10, wobei die Dekorlage (6) und/oder die Decklage (9) vor dem Verbinden mit dem Träger (2) geformt, vorzugsweise tiefgezogen, wird.

12. Verfahren nach einem der Ansprüche 8 bis 11, wobei die Fasern (7), das Bindemittel (8) und/oder die synthetischen Fasern (5), vorzugsweise vor ihrer Verbindung, eingefärbt werden.

## Claims

1. A fitting part (1) comprising a backing (2) made of a material containing at least one natural substance (3),
wherein the backing is at least partially covered on its visible side by a decorative layer (6) made of a natural, preferably plant-based, material containing fibers (7),
**characterized in that**
the backing and/or the decorative layer (6) is at least partially provided with a transparent or translucent top layer (9);
the top layer (9) is a film;
a lacquer coat is applied to the transparent or translucent top layer (9) or the top layer (9) is colored;
the fibers (7) of the decorative layer (6) material are in the form of nonwoven fabric, felt, woven or knitted fabric;
the material of the backing (2) or the decorative layer (6) comprises a binding agent composed of a thermoplastic synthetic material.

2. The fitting part (1) according to claim 1, wherein the top layer (9) is composed of an at least partially transparent or at least partially translucent plastic film made of thermoplastic polyurethane (TPU), polypropylene (PP) having a polyurethane coating on the visible side, polyamide (PA) or polycarbonate (PC).

3. The fitting part (1) according to claim 1 or 2, wherein the backing (2) comprises wood particles (3).

4. The fitting part (1) according to one of the preceding claims, wherein the decorative layer (6) consists of one or more segments.

5. The fitting part (1) according to one of the preceding claims, wherein a layer (6), particularly the decorative layer (6), comprises natural fibers and a binding agent (8), wherein the fibers and/or the binding agent (8) are colored.

6. The fitting part (1) according to claim 5, wherein the fibers (7) and the binding agent (8) are differently colored.

7. The fitting part (1) according to one of the preceding claims, wherein the backing (2) and/or the decorative layer (6) comprise synthetic fibers (5).

8. A method for producing a fitting part according to one of the preceding claims, **characterized in that** the decorative layer (6) as a semi-finished product and the top layer (9) are inserted into a tool and preferably three-dimensionally shaped and bonded to one another under the application of heat.

9. The method according to claim 8, wherein the top layer (9) is subsequently or simultaneously bonded to the backing (2).

10. The method according to claim 8 or 9, wherein the backing (2) is applied to the decorative layer (6) particularly by lamination or back-injection molding.

11. The method according to one of claims 8 to 10, wherein the decorative layer (6) and/or the top layer (9) are shaped, preferably deep-drawn, prior to being bonded to the backing (2).

12. The method according to one of claims 8 to 11, wherein the fibers (7), the binding agent (8) and/or the synthetic fibers (5) are preferably colored prior to being bonded.

## Revendications

1. Élément d'équipement (1) comprenant un support (2) qui est fabriqué d'un matériau contenant au moins un matériau naturel (3),
dans lequel le support est au moins proportionnellement recouvert sur sa face visible d'une couche décorative (6) faite d'un matériau contenant des fibres naturelles, de préférence végétales (7),
**caractérisé en ce que**
le support et/ou la couche décorative (6) sont pourvus au moins proportionnellement d'une couche de couverture (9) transparente ou translucide ;
la couche de couverture (9) est un film ;
une couche de peinture est appliquée sur la couche décorative (9) transparente ou translucide, ou la couche de couverture (9) est colorée ;
les fibres (7) du matériau de la couche décorative (6) se présentent sous forme de non-tissé, de feutre, de tissu ou de tricot ;
le support (2) ou la couche décorative (6) présentent dans leur matériau un liant qui est constitué d'une matière plastique thermoplastique.

2. Élément d'équipement (1) selon la revendication 1,
dans lequel la couche décorative (9) est constituée d'un film en matière plastique au moins partiellement transparent ou au moins partiellement translucide en polyuréthane thermoplastique (TPU), en polypropylène (PP) ayant un revêtement de polyuréthane sur la face visible, en polyamide (PA) ou en polycarbonate (PC).

3. Élément d'équipement (1) selon la revendication 1 ou 2,
dans lequel le support (2) comprend des particules de bois (3).

4. Élément d'équipement (1) selon l'une des revendications précédentes, dans lequel la couche décorative (6) est composée d'un ou de plusieurs segments.

5. Élément d'équipement (1) selon l'une des revendications précédentes, dans lequel une couche (6), en particulier la couche décorative (6), contient des fibres naturelles et un liant (8), les fibres (7) et/ou le liant (8) étant colorés.

6. Élément d'équipement (1) selon la revendication 5,
dans lequel les fibres (7) et le liant (8) sont colorés différemment.

7. Élément d'équipement (1) selon l'une des revendications précédentes, dans lequel le support (2) et/ou la couche décorative (6) comporte(nt) des fibres synthétiques (5).

8. Procédé de fabrication d'un élément d'équipement selon l'une des revendications précédentes,
**caractérisé en ce que** la couche décorative (6) en tant que produit semi-fini et la couche de couverture (9) sont insérées dans un outil et sont mises en forme, de préférence en trois dimensions, et assemblées l'une à l'autre par apport de chaleur.

9. Procédé selon la revendication 8,
dans lequel la couche de couverture (9) est ultérieurement ou simultanément assemblée au support (2).

10. Procédé selon la revendication 8 ou 9,
dans lequel le support (2) est appliqué sur la couche de couverture (9), en particulier par laminage ou par rétro-injection.

11. Procédé selon l'une des revendications 8 à 10,
dans lequel la couche décorative (6) et/ou la couche de couverture (9) est mise en forme, de préférence par emboutissage profond, avant d'être assemblée au support (2).

12. Procédé selon l'une des revendications 8 à 11,
dans lequel les fibres (7), le liant (8) et/ou les fibres synthétiques (5) sont colorés, de préférence avant leur assemblage.
